# EUROPEAN PATENT SPECIFICATION

(11) **EP 1 036 977 B1**
(45) Date of publication and mention of the grant of the patent: **01.06.2005**
(21) Application number: 00200954.6
(22) Date of filing: 16.03.2000
(51) Int. Cl.: F16N 11/04

(54) **Lubricating device for a drive chain**
Schmiervorrichtung für eine Antriebkette
Dispositif de lubrification pour une chaîne d'entraînement

(30) Priority: 18.03.1999 NL 1011597
(43) Date of publication of application: 20.09.2000
(73) Proprietor: Haanschoten, Jozef Gijsbert, 3906 NB Veenendaal (NL); Haanschoten, Hendrik Jacob Johan, 3906 NG Veenendaal (NL); Haanschoten, Hans Jürgen, 3906 NB Veenendaal (NL); Diepeveen, Henk Jan, 3905 WN Veenendaal (NL)
(72) Inventor: Haanschoten, Jozef Gijsbert, 3906 NB Veenendaal (NL)
(74) Representative: Aalbers, Arnt Reinier

(56) References cited:
- EP-A- 0 806 602
- DE-C- 451 501
- DE-U- 29 512 697
- FR-A- 780 443
- GB-A- 565 381
- GB-A- 2 250 781
- US-A- 4 679 659
- US-A- 5 598 902

## Description

The invention relates to a lubricating device for a chain, in particular for a motorcycle drive chain, comprising a reservoir for a liquid lubricant, an outlet opening for delivering the lubricant, a shut-off valve by means of which the reservoir can be shut off from the outlet opening, and a dosaging system for operating the shut-off valve.

A lubricating device of this kind is for example known from British patent application No. 2 071 055. Said publication relates inter alia to a lubricating device for motorcycle chains comprising an oil reservoir which is divided into two chambers by a membrane. The upper chamber is connected to the intake manifold of the engine, whilst the lower chamber contains oil. The membrane is connected to the outlet opening of the reservoir, such that when the membrane is raised by a vacuum (from the intake manifold) in the upper chamber, oil will flow from the reservoir to the chain. One drawback of a system of this kind is that it delivers oil at moments when this is undesirable, for example during standstill and at high speeds.

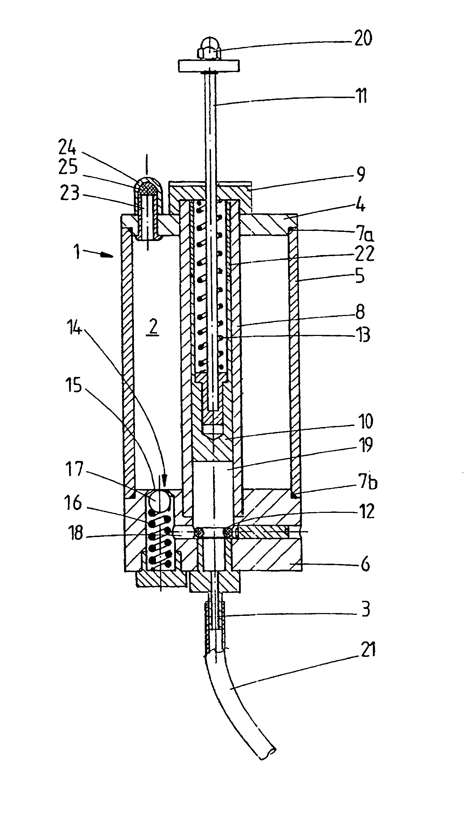

Figures 6 and 7 of GB-A-2 071 055 show a hand-operated version, wherein a vacuum is briefly generated by manually compressing a bellows. This makes it possible to lubricate the motorcycle chain for a relatively short period of time at any desired moment. The extent to which such a bellows is depressed will vary each time, however. As a result, the chain is generally lubricated either insufficiently, which may lead to relatively quick wear on the chain, or excessively, with the excess of oil being flung off the chain while driving and landing on the rider's clothes or on the tread of the rear tyre of the motorcycle. In the latter case the rider's safety is endangered.

DE 451501 C and/or US 4679659 A disclose a lubricating device for a chain or at least a device suitable for lubricating a chain comprising a reservoir for a liquid lubricant, an outlet opening delivering the lubricant, a shut-off valve in a suction line in communication with the reservoir (one way valves) by means of which the reservoir is shut off from the outlet opening , and a dosaging system comprises means (a computer or manual operating mean) for at will delivering an adjustable amount of lubricant.

The object of the invention is to provide a lubricating device of the kind referred to in the introduction which does not exhibit the aforesaid drawbacks.

In order to accomplish that objective, the lubricating device according to the invention is characterized in accordance with claim 1.

Thus a lubricating device is obtained wherein the amount of lubricant to be delivered can be adjusted in dependence on the requirement of a specific combination of drive chain and, in the case of a motorcycle, the motorcyclist's driving behaviour.

The invention will be explained in more detail with reference to a drawing, which schematically shows an exemplary embodiment of the lubricating device according to the invention.

The figure shows in sectional view a lubricating device 1 according to the invention which is suitable for lubricating a drive chain, in particular for lubricating a motorcycle chain. The device comprises a reservoir 2 for a liquid lubricant, for example chain oil, and an outlet opening 3 for delivering the lubricant. Reservoir 2 comprises an upper part 4, a hollow cylindrical body 5 and a lower part 6. The hollow cylindrical body 5 is preferably made of a transparent material, so that the level of the lubricant can easily be checked. Upper part 4 and lower part 6 are made of a metal or of a plastic, for example.

Disposed inside reservoir 2 is a hollow, cylindrical tube 8, which is screwed into lower part 6 by means of screw thread. Hollow cylindrical tube 8 extends with its upper side through a hole in upper part 4, which hole is circular and which has an inside diameter which is approximately 0.05 mm larger than the outside diameter of tube 8. The upper side of tube 8, i.e. at least the part which extends through the hole in upper part 4, is provided with external screw thread, on which an internally threaded cap 9 is screwed. Cap 9 presses upper part 4 against the hollow cylindrical body 5, thus keeping the assembly of lower part 6, hollow cylindrical body 5 and upper part 4 together and, moreover, making it easily detachable. The assembly is sealed by means of packing rings 7a, 7b.

The inner wall of tube 8 forms a cylinder in which a piston 10 is disposed. The upper part of the tube 8 can be provided with one or more venting holes. Piston 10, which is partially hollow and which can be considerably shorter than the one shown in the figure so as to reduce the chance of the piston 10 sticking to the inner wall of the tube 8, is provided with screw thread, into which a piston rod 11 is screwed, which piston rod 11 extends through cap 9, so that the piston 10 can be operated from outside. The freedom of movement of piston 10 is limited on the bottom side by a constriction of the cylinder, for example, or preferably by an elastic O-ring 12, which ensures that outlet opening 3 is shut off properly with the piston in its lower position. It is possible to use a wire cable or bowden cable, for example, instead of piston rod 11. The length of such a cable may be selected so that the lubricating device can be operated from the handlebars of a motorcycle.

A spring 13 is disposed round piston rod 11 above piston 10, which spring urges the piston 10 to its lower position, that is, in abutment with ring 12. Spring 13 accordingly pushes off against cap 9.

Lower part 6 of the lubricating device includes a shut-off valve 14, which comprises a suction hole 15 in the form of a truncate cone, and which is shut off by a ball 17 which is held in position by a spring 16. The cavity in which spring 16 and ball 17 are present is in communication with the cylindrical cavity 19 in tube 8 via a suction line 18. By raising the piston 10 against the action of spring 13 by means of piston rod 11, which is provided with a handle 13, a sub-atmospheric pressure is generated in cylindrical cavity 19. As a result, the oil in reservoir 2 will urge the ball 17 downwards against the action of spring 16 and flow past ball 17 to cylindrical cavity 19 via suction line 18. A non-return valve (not shown) may be disposed in outlet opening 3 or behind outlet opening 3, for example in a hose 21 which is connected to outlet opening 3 and which leads to the drive chain. The presence of a non-return valve is in particular desirable when a very thin lubricating oil is used.

When piston 10 is no longer being pulled up, the flow of oil from reservoir 2 along ball 17 will be stopped practically immediately, since the suction hole 15 is closed by spring 16 and ball 17. When the handle 20 is released, the piston 10 will be urged downwards by the action of spring 13, as a result of which the oil will flow from outlet opening 3. The oil pressure will further contribute to the action of the spring 16, so that no oil can flow past ball 17 back to reservoir 2.

By disposing a sleeve 22 round piston rod 11 and spring 13 above piston 10 and under cap 9, the movement of piston 10 is limited on the upper side as well. In other words, each time piston 10 is pulled to its upper position and subsequently released, a (substantially) identical volume of lubricating oil, for example ranging between 1 and 6 ml, will be delivered via outlet opening 3.

This volume can be adjusted in a simple manner by placing another sleeve 22 round piston rod 11 and spring 13. When the hollow sleeve 22 is made of a material which is capable of being cut, for example a plastic, and provided with one or more weakened spots, for example annular weakened spots, the length of the hollow sleeve 22 can be readily reduced. When hollow sleeve 22 is furthermore provided with a substantially straight slot, which extends the entire length of sleeve 22 and which is preferably wider than spring 13, the hollow sleeve 22 can be replaced without removing cap 9 and handle 20 from piston rod 11.

As an alternative for the hollow sleeve 22 it is for example possible to use an adjusting screw mounted in cap 9, which abuts against the upper side of hollow sleeve 22, so that the position of hollow sleeve 22, and thus the amount of lubricant which is delivered, can be varied from outside by tightening or slackening the adjusting screw. Furthermore it is possible to provide the hollow sleeve 22 with external screw thread and pass it through cap 9, which is provided with mating screw thread, so that hollow sleeve 22 can be operated directly and from outside.

Instead of using a sleeve or the like it is, for instance, also possible to use a spring with a relatively large number of windings which thus allows only limited compression and accordingly only limited upward movement of the piston. A combination of such a spring with a sleeve placed in line with the spring is also contemplated.

Venting of the reservoir preferably takes place via a filling opening 20. Opening 20 is to that end designed in the form of a circular tube which is sealed by means of a round cap 24, which comprises an air-permeable piece of felt 25. By flattening the tube on the outside in at least one place along a length larger than the length of tube which is in contact with the sealing cap, the reservoir is in permanent communication with the atmosphere.

The lubricating device according to the invention is preferably provided with mounting means for mounting the system on a motorcycle, for example on the frame.

The invention is not restricted to the above-described exemplary embodiments, which can be varied in several ways without departing from the scope of the claims.

## Claims

1. A lubricating device for a chain, in particular for a motorcycle drive chain, comprising a reservoir (2) for a liquid lubricant, an outlet opening (3) for delivering the lubricant, a shut-off valve (14) by means of which the reservoir (2) can be shut off from the outlet opening (3), and a dosaging system for operating the shut-off valve (14), said dosaging system comprises means for at will delivering an adjustable amount of lubricant **characterized in that** said means comprise a cylinder (19) in which a piston (10) is disposed, and to which a suction line (18), which is in communication with the reservoir (2), and a pressure pipe, which is in communication with the outlet opening (3), are connected and wherein said reservoir (2) is defined by an upper part (4), a hollow body (5), a lower part (6) and a hollow rod (8), which is disposed in said hollow body (5), interconnects the upper part (4) and the lower part (6), and forms said cylinder (19).

2. A lubricating device according to claim 1, wherein said piston (10) is capable of movement between an upper position and a lower position, wherein said upper position or said lower position is adjustable.

3. A lubricating device according to claim 2, wherein a spring element (13) is disposed above the piston (10), which spring element urges the piston (10) to its lower position.

4. A lubricating device according to claim 2 or 3, comprising a piston rod (11) or a cable by means of which the piston (10) can be pulled to its upper position, a stop (9) which is disposed above said piston (10), and a hollow sleeve (22) which is disposed round the piston rod (11) or the cable and between said piston (10) and said stop (9).

5. A lubricating device according to claim 4, wherein said hollow sleeve (22) is provided with a substantially straight slot in its wall, which slot extends the entire length of said hollow sleeve (22).

6. A lubricating device according to claim 4 or 5, wherein said hollow sleeve (22) is made of a material which is capable of being cut and/or is provided with one or more weakened spots, in such a manner that the hollow sleeve (22) can easily be reduced.

7. A lubricating device according to any one of the preceding claims, wherein the upper part (4) is provided with a hole through which the rod (8) extends, and wherein means are mounted on the rod (8) above the upper part, which means urge the upper part (4) in abutment with the hollow body (5).

## Patentansprüche

1. Schmiervorrichtung für eine Kette, insbesondere für eine Motorradantriebskette, aufweisend ein Reservoir (2) für ein flüssiges Schmiermittel, eine Auslassöffnung (3) zum Zuführen des Schmiermittels, ein Absperrventil (14), mittels welchem das Reservoir (2) von der Auslassöffnung (3) abgesperrt werden kann, und ein Dosierungssystem zum Betätigen des Absperrventils (14), wobei das Dosierungssystem Mittel zum willkürlichen Zuführen einer einstellbaren Menge von Schmiermittel aufweist, **dadurch gekennzeichnet, dass** die Mittel einen Zylinder (19) aufweisen, in welchem ein Kolben (10) angeordnet ist und mit welchem eine Saugleitung (18), welche mit dem Reservoir (2) in Verbindung steht, und eine Druckleitung, welche mit der Auslassöffnung (3) in Verbindung steht, verbunden sind, und wobei das Reservoir (2) durch ein oberes Teil (4), einen hohlen Körper (5), ein unteres Teil (6) und eine hohle Stange (8) definiert ist, welche in dem hohlen Körper (5) angeordnet ist, das obere Teil (4) und das untere Teil (6) miteinander verbindet, und den Zylinder (19) bildet.

2. Schmiervorrichtung nach Anspruch 1, wobei der Kolben (10) zur Bewegung zwischen einer oberen Position und einer unteren Position geeignet ist, wobei die obere Position oder die untere Position einstellbar ist.

3. Schmiervorrichtung nach Anspruch 2, wobei ein Federelement (13) oberhalb des Kolbens (10) angeordnet ist, welches Federelement den Kolben (10) in dessen untere Position vorspannt.

4. Schmiervorrichtung nach Anspruch 2 oder 3, aufweisend eine Kolbenstange (11) oder ein Seil, mittels welchem der Kolben (10) in dessen obere Position gezogen werden kann, einen Anschlag (9), welcher oberhalb des Kolbens (10) angeordnet ist, und eine hohle Hülse (22), welche um die Kolbenstange (11) oder das Seil herum und zwischen dem Kolben (10) und dem Anschlag (9) angeordnet ist.

5. Schmiervorrichtung nach Anspruch 4, wobei die hohle Hülse (22) mit einem im Wesentlichen geraden Schlitz in deren Wand versehen ist, welcher Schlitz sich über die gesamte Länge der hohlen Hülse (22) erstreckt.

6. Schmiervorrichtung nach Anspruch 4 oder 5, wobei die hohle Hülse (22) aus einem Material hergestellt ist, welches zum Schneiden geeignet ist und/oder mit einer oder mehreren geschwächten Stellen in einer solchen Weise versehen ist, dass die hohle Hülse (22) leicht reduziert werden kann.

7. Schmiervorrichtung nach einem der vorhergehenden Ansprüche, wobei der obere Teil (4) mit einem Loch versehen ist, durch welches hindurch sich die Stange (8) erstreckt, und wobei Mittel an der Stange (8) oberhalb des oberen Teils montiert sind, welche Mittel das obere Teil (4) in Anlage mit dem hohlen Körper (5) drängen.

## Revendications

1. Dispositif de lubrification pour une chaîne, en particulier pour une chaîne d'entraînement de cyclomoteur, comprenant un réservoir (2) pour un lubrifiant liquide, une ouverture d'écoulement (3) pour distribuer le lubrifiant, une vanne d'arrêt (14) au moyen de laquelle le réservoir (2) peut être fermé à partir de l'ouverture d'écoulement (3) et un système de dosage pour le fonctionnement de la vanne d'arrêt (14), ledit dispositif de dosage comprend des moyens pour distribuer à volonté une quantité réglable de lubrifiant, lesdits moyens comprennent un cylindre (19) dans lequel est disposé un piston (10) et sur lequel une conduite d'aspiration (18), qui est en communication avec le réservoir (2), et une conduite de pression, qui est en communication avec l'ouverture d'écoulement (3), sont raccordées, dans lequel ledit réservoir (2) est défini par une partie supérieure (4), un corps creux (5), une partie inférieure (6), et une tige creuse (8), qui est disposée dans ledit corps creux (5), connecte entre eux la partie supérieure (4) et la partie inférieure (6) et forme ledit cylindre (19).

2. Dispositif de lubrification selon la revendication 1, dans lequel ledit piston (10) est apte au mouvement entre une position supérieure et une position inférieure, dans lequel ladite position supérieure ou ladite position inférieure est réglable.

3. Dispositif de lubrification selon la revendication 2, dans lequel un élément à ressort (13) est disposé au-dessus du piston (10), lequel élément à ressort contraint le piston (10) sur sa position inférieure.

4. Dispositif de lubrification selon la revendication 2 ou 3, comprenant une tige de piston (11) ou un câble au moyen duquel le piston (10) peut être tiré sur sa position supérieure, une butée (9) qui est disposée au-dessus dudit piston (10) et un manchon creux (22) qui est disposé autour de la tige de piston (11) ou du câble et entre ledit piston (10) et ladite butée (9).

5. Dispositif de lubrification selon la revendication 4, dans lequel ledit manchon creux (22) est doté d'une fente sensiblement droite dans sa paroi, laquelle fente s'étend sur toute la longueur dudit manchon creux (22).

6. Dispositif de lubrification selon la revendication 4 ou 5, dans lequel ledit manchon creux (22) est réalisé en un matériau qui est capable d'être découpé et/ou qui est muni d'un ou de plusieurs emplacements affaiblis, de telle manière que le manchon creux (22) peut facilement être réduit.

7. Dispositif de lubrification selon l'une quelconque des revendications précédentes, dans lequel la partie supérieure (4) est dotée d'un trou à travers lequel s'étend la tige (8), et dans lequel des moyens sont montés sur la tige (8) au-dessus de la partie supérieure, moyens qui forcent la partie supérieure (4) en butée contre le corps creux (5).
